# EUROPÄISCHE PATENTANMELDUNG

(11) **EP 4 733 277 A1**
(43) Veröffentlichungstag der Anmeldung: **29.04.2026**
(21) Anmeldenummer: 25210340.3
(22) Anmeldetag: 22.10.2025
(51) Int. Cl.: C02F 11/13, C02F 11/06, C10L 5/36

(54) **TROCKNUNG VON KLÄRSCHLAMM**

(30) Priorität: 25.10.2024 DE 102024131254
(71) Anmelder: RWE Power AG, 45141 Essen (DE)
(72) Erfinder: LANGE, Raimund, 45141 Essen (DE)
(74) Vertreter: Keenway Patentanwälte Neumann Heine Taruttis

(57) **Zusammenfassung**

Verfahren zur Behandlung von Klärschlamm (2), welcher zu Beginn des Verfahrens einen Trockensubstanzgehalt im Bereich von 30 bis 75 Ma.-% hat, umfassend:
a) Zuführen des Klärschlamms (2) in eine Pelletiereinrichtung (3) mit einer motorisch angetriebenen Presse (4),
b) Pelletieren des Klärschlamms (2) mit der Pelletiereinrichtung (3) zu Pellets (5),
c) Transferieren der in Schritt b) erhaltenen Pellets (5) zu einer Trocknungseinrichtung (6),
d) Trocknen der Pellets (5) in der Trocknungseinrichtung (6), so dass die Pellets (5) nach dem Trocknen einen Trockensubstanzgehalt von mindestens 80 Ma.-% haben.

## Beschreibung

Die Erfindung betrifft ein Verfahren zur Behandlung von Klärschlamm, insbesondere zur Trocknung und thermischen Verwertung. Der Klärschlamm hat zu Beginn des Verfahrens einen Trockensubstanzgehalt im Bereich von 30 bis 75 Ma.-%. Weiterhin betrifft die Erfindung eine entsprechende Vorrichtung.

Bei der Behandlung von Abwasser fällt Klärschlamm an. Für dessen Verwertung kommt es insbesondere auf den Trockensubstanzgehalt (TS-Gehalt) des Klärschlamms an. Dabei handelt es sich um den prozentualen Feststoffanteil in dem Klärschlamm. Der Trockensubstanzgehalt wird üblicherweise in Ma.-% (Massenprozent) angegeben.

Üblicherweise werden insoweit die folgenden Arten von Klärschlamm unterschieden:
▪ mechanisch entwässerter Klärschlamm (Trockensubstanzgehalt 20 bis 30 Ma.-%),
▪ teilgetrockneter Klärschlamm (Trockensubstanzgehalt 55 bis 70 Ma.-%),
▪ vollgetrockneter Klärschlamm (Trockensubstanzgehalt 85 Ma.-% oder mehr).

Mechanisch entwässerter Klärschlamm kann direkt in einem Klärwerk erhalten werden. Dazu wird der Rohschlamm bspw. mit einem Dekanter oder mit einer Horizontalzentrifuge von einem Trockensubstanzgehalt von 5 Ma.-% auf 20 bis 30 Ma.-% gebracht. Das ermöglicht den Transport mittels bspw. eines Kipper- oder Container-LKW. Zudem reduziert die mechanische Entwässerung das Transportvolumen und die Transportmasse und damit die Transportkosten. Auch die Lagerung, der Umschlag und die Aufgabe im Zuge weiterer Verarbeitungsschritte wie einer thermischen Verwertung werden durch die mechanische Entwässerung erleichtert. Zudem wird der Heizwert des Klärschlamms durch die mechanische Entwässerung gesteigert.

Teilgetrockneter Klärschlamm wird bspw. durch solare oder solar-thermische Trocknung mechanisch entwässerten Klärschlamms erzeugt. Damit können die Kosten für Transport und Lagerung weiter gesenkt werden und der Heizwert weiter gesteigert werden. Dazu kann die Sonnenenergie und/oder auch Abwärme in Form von Niedertemperaturwärme bspw. aus Biogas-Anlagen als Energiequelle ausgenutzt werden, was diese Art der Trocknung abh. von den Randbedingungen - insbesondere bei kleinen Anlagen und Klärschlammdurchsätzen - besonders effizient macht.

Wird Klärschlamm auf einen Trockensubstanzgehalt von 50 Ma.-% und mehr gebracht, wird typischer die sogenannte Leimphase durchfahren. Dabei ist die mechanische Handhabung des Klärschlamms erschwert. Oberhalb des zuvor genannten Trockensubstanzgehaltes besitzt der teilgetrocknete Klärschlamm schüttgutähnliche Eigenschaften.

Vollgetrockneter Klärschlamm kann u.a. durch Bandtrocknungsanlagen aus mechanisch entwässertem Klärschlamm unter Nutzung von Niedertemperaturwärme erzeugt werden. Vollgetrockneter Klärschlamm hat den höchsten Heizwert, das geringste Transportvolumen und die besten Verbrennungseigenschaften. Insbesondere vollgetrockneter Klärschlamm ist selbsttätig brennbar, erzeugt ein geringeres Rauchgasvolumen (aufgrund der nur noch minimal in die Feuerung über den Brennstoff eingetragenen Wassermenge) und wirkt sich im Vergleich zu Klärschlamm mit geringerem Trockensubstanzgehalt besonders gut auf die Verbrennungstemperatur und damit den Wirkungsgrad der Feuerung aus. Ferner ist vollgetrockneter Klärschlamm aufgrund des Temperaturniveaus bei der Trocknung biologisch stabil, was sich positiv auf die Anforderungen an die Zwischenlagerung auswirkt.

Klärschlamm kann insbesondere thermisch verwertet werden. Die dafür regelmäßig eingesetzten Monoverbrennungsanlagen sind in der Regel auf die überwiegende Annahme von mechanisch entwässertem Klärschlamm ausgelegt. In Einzelfällen besitzen die Anlagen eine Möglichkeit, bei gegebener Verfügbarkeit auch vollgetrockneten Klärschlamm aufzunehmen. Die thermische Verwertung von teilgetrocknetem Klärschlamm ist jedoch problematisch. Das liegt im Wesentlichen an den Stoffeigenschaften des teilgetrockneten Klärschlamms sowie am üblichen Layout solcher Monoverbrennungsanlagen.

Teilgetrockneter Klärschlamm ist in einem solche Maße staubig, dass seine Handhabung erschwert ist und eine Absaugung bei der Förderung erforderlich wird. Allerdings genügt der Trockensubstanzgehalt von teilgetrocknetem Klärschlamm dennoch nicht für eine pneumatische Beförderung des teilgetrockneten Klärschlamms. Der Wassergehalt des teilgetrockneten Klärschlamms wiederum ist zu gering zum Pumpen mittels bspw. hydraulisch angetriebenen Kolbenpumpen. Der Wassergehalt sowie die verfügbare Menge von teilgetrocknetem Klärschlamm kann zudem in Abhängigkeit von der Jahreszeit schwanken. Das gilt insbesondere, wenn der teilgetrocknete Klärschlamm ausschließlich unter Ausnutzung der Sonnenenergie erzeugt wird.

Der Trocknungsprozess kann zudem zu einer biologischen Aktivierung führen, was eine erhebliche Geruchsbelästigung, Selbsterwärmungsprozesse und Ausgasung bewirken kann. Die Restfeuchte im teilgetrockneten Klärschlamm kann zudem Anbackungs- und Austragsprobleme beispielsweise bei Schnecken- und Trogkettenförderern verursachen oder bei Bandförderern zu einem hohen Verschmutzungsanfall führen.

Ferner ist zu erwähnen, dass eine Aufgabe von teilgetrocknetem Klärschlamm bspw. in einen mit mechanisch entwässerten Klärschlamm gefüllten Bunker aber auch Lagerhalle mit dem Ziel des Mischens beider Klärschlämme mittels Bunkerkran oder Radlader problematisch ist, da die Klärschlämme abhängig vom Mischungswassergehalt der Schlämme in die Leimphase übergehen können und damit ein mechanisches Materialhandling sehr deutlich erschwert wird. Daher stellt diese Vorgehensweise zur Einbringung von teilgetrocknetem Klärschlamm in Monoverbrennungsanlagen einen seltenen Sonderfall dar.

All die genannten Punkte führen dazu, dass die thermische Verwertung von teilgetrocknetem Klärschlamm schwierig ist und wenig Zuspruch bei Betreibern von Monoverbrennungsanlagen findet. Allerdings wäre es wünschenswert, den unter Nutzung von Sonnenenergie oder Niedertemperaturwärme teilgetrockneten Klärschlamm auf einfache und effiziente Weise thermisch verwerten zu können, am besten mit bestehenden Verwertungsanlagen.

Ein denkbarer Ansatz ist, den teilgetrockneten Klärschlamm auf das Niveau von mechanisch entwässertem Klärschlamm zu befeuchten. Das ist aber energetisch ineffizient. Ein Mischen mit vollgetrocknetem Klärschlamm ist insbesondere aufgrund der zuvor genannten Problematik mit der Leimphase schwierig. Das Nachtrocknen von teilgetrocknetem Klärschlamm ist im Stand der Technik nicht geläufig. Mit Blick auf verfügbare Trocknungsverfahren für Klärschlamm - insbesondere Bandtrockneranlagen - muss festgestellt werden, dass teilgetrockneter Klärschlamm im Anlieferungszustand nicht direkt eingesetzt werden kann. Ursächlich hierfür sind ein zu hoher Staubanteil, die Erfordernisse an den Explosionsschutz, die erforderliche Staubentfernung in feuchter Abluft, eine stark variierende Korngrößenverteilung des Aufgabegutes und damit unterschiedliche Trocknungsgrade innerhalb der Schüttung der Bandtrockneranlage.

Bei einem bekannten Ansatz zur Trocknung von mechanisch entwässertem Klärschlamm wird der Klärschlamm über eine Pumpe durch eine Rohrleitung und anschließend durch eine Matrize gepresst, so dass gleichförmige Pellets entstehen. Die Matrize kann quer zu einem Band eines Bandtrockners bewegt werden, so dass die Pellets gleichmäßig und mit einer für die Trocknung sehr wichtigen gleichmäßigen Schütthöhe zur Sicherstellung eines gleichmäßigen Druckverlustes über die Schüttung über das Band verteilt aufgebracht werden können. Dieser Ansatz ist jedoch nicht für teilgetrockneten Klärschlamm geeignet, da dieser aufgrund seines höheren TS-Gehaltes nicht pumpfähig ist.

Es besteht also ein Bedarf, teilgetrockneten Klärschlamm für die thermische Verwertung nachtrocknen zu können. Auch für andere Anwendungen kann es vorteilhaft sein, teilgetrockneten Klärschlamm nachtrocknen zu können. Dieses Bedürfnis besteht auch nicht nur dann, wenn die oben angegebene Definition von teilgetrocknetem Klärschlamm genau erfüllt ist, sondern auch etwas darüber hinaus.

Aufgabe der vorliegenden Erfindung ist es daher, eine Möglichkeit zu schaffen, Klärschlamm mit einem Trockensubstanzgehalt im Bereich von 30 bis 75 Ma.-% auf einfache und effiziente Weise nachzutrocknen.

Diese Aufgabe wird gelöst mit dem Verfahren und der Vorrichtung gemäß den unabhängigen Ansprüchen. Weitere vorteilhafte Ausgestaltungen sind in den abhängigen Ansprüchen angegeben. Die in den Ansprüchen und in der Beschreibung dargestellten Merkmale sind in beliebiger, technologisch sinnvoller Weise miteinander kombinierbar.

Erfindungsgemäß wird ein Verfahren zur Behandlung von Klärschlamm beschrieben. Der Klärschlamm hat zu Beginn des Verfahrens einen Trockensubstanzgehalt im Bereich von 30 bis 75 Ma.-%. Das Verfahren umfasst:
a) Zuführen des Klärschlamms in eine Pelletiereinrichtung mit einer motorisch angetriebenen Presse,
b) Pelletieren des Klärschlamms mit der Pelletiereinrichtung zu Pellets,
c) Transferieren der in Schritt b) erhaltenen Pellets zu einer Trocknungseinrichtung,
d) Trocknen der Pellets in der Trocknungseinrichtung, so dass die Pellets nach dem Trocknen einen Trockensubstanzgehalt von mindestens 80 Ma.-% haben.

Mit dem Verfahren kann Klärschlamm behandelt werden. Die Behandlung umfasst ein Trocknen. Darüber hinaus kann die Behandlung auch weitere Behandlungsschritte umfassen, insbesondere eine thermische Verwertung. Daher wird das Verfahren allgemein als Verfahren zur Behandlung von Klärschlamm bezeichnet. Alternativ könnte das Verfahren als Verfahren zur Trocknung von Klärschlamm oder, sofern auch eine thermischen Verwertung Teil des Verfahrens ist, als ein Verfahren zur Trocknung und thermischen Verwertung von Klärschlamm bezeichnet werden.

Der Klärschlamm hat zu Beginn des Verfahrens einen Trockensubstanzgehalt im Bereich von 30 bis 75 Ma.-%, vorzugsweise im Bereich von 50 bis 70 Ma.-%. Der Klärschlamm kann zu Beginn des Verfahrens insbesondere teilgetrockneter Klärschlamm sein. Darunter wird hierin Klärschlamm mit einem Trockensubstanzgehalt im Bereich von 50 bis 70 Ma.-% verstanden. Damit jedoch dahinstehen kann, ob dies eine allgemeingültige Definition ist, wird der Trockensubstanzgehalt hierin konkret angeben. Zudem kann das Verfahren nicht nur auf Klärschlamm mit einem Trockensubstanzgehalt im Bereich von 50 bis 70 Ma.-%. angewendet werden, sondern allgemein auf Klärschlamm mit einem Trockensubstanzgehalt im Bereich von 30 bis 75 Ma.-%.

In Schritt a) wird der Klärschlamm in eine Pelletiereinrichtung zugeführt. Das impliziert, dass die Art der Zuführung so gewählt ist, dass der Klärschlamm für diese Art der Zuführung geeignet ist. Zu Beginn des Verfahrens ist der Klärschlamm vorzugsweise rieselfähig. Der Klärschlamm kann in Schritt a) unter Ausnutzung der Rieselfähigkeit in die Pelletiereinrichtung zugeführt werden.

Der Klärschlamm wird der Pelletiereinrichtung vorzugsweise mechanisch zugeführt. Insbesondere kann der Klärschlamm oberhalb eines Einlasses der Pelletiereinrichtung bereitgestellt werden und unter Ausnutzung der Schwerkraft in einer gerade oder schräg nach unten gerichteten Richtung zum Einlass der Pelletiereinrichtung geleitet werden. Beispielsweise kann der Klärschlamm mit einem Förderband oder Schneckenförderer befördert werden, am Ende des Förderbandes oder Schneckenförderers nach unten fallen und so in den unterhalb des Förderbandes oder Schneckenförderer angeordneten Einlass der Pelletiereinrichtung gelangen.

Vorzugsweise ist der Klärschlamm zu Beginn des Verfahrens nicht pumpfähig. Das ist nicht erforderlich - würde aber auch im Allgemeinen nicht schaden. Der Klärschlamm kann in dem Fall nicht durch eine Rohrleitung zum Einlass der Pelletiereinrichtung gepumpt werden. Mit der zuvor beschriebenen Vorgehensweise ist aber dennoch eine Möglichkeit gegeben, den Klärschlamm der Pelletiereinrichtung zuzuführen.

In Schritt b) wird der Klärschlamm mit der Pelletiereinrichtung pelletiert. Die Pelletiereinrichtung hat eine motorisch angetriebene Presse. Die Pelletiereinrichtung weist also neben der Presse auch einen Antrieb auf, über welchen die Presse motorisch angetrieben ist. Die zum Pelletieren benötigte Kraft wird also von der Pelletiereinrichtung selbst erzeugt. Insbesondere ist es nicht erforderlich, die zum Pelletieren benötigte Kraft über den Klärschlamm selbst zu übertragen. Letzteres wäre beispielsweise der Fall, wenn pumpfähiger Klärschlamm über eine Rohrleitung zu einer Matrize gepumpt würde. Mit einer Pumpe würde der Klärschlamm dazu unter Druck gesetzt werden. Aufgrund dieses Drucks würde der Klärschlamm durch die Matrize gepresst und so zu Strängen geformt. Durch periodisches Zerteilen der Stränge beispielsweis mit einem an der Matrize rotierenden Messer könnten die Stränge dann zu Pellets zerteilt werden.

Bei dem beschriebenen Verfahren kommt hingegen eine motorisch angetriebene Presse zum Einsatz. Eine Pumpe, welche den Klärschlamm über eine Rohrleitung zu einer Matrize pumpt, ist keine Presse. Der wesentliche funktionale Unterschied liegt darin, dass die mit der Pumpe erzeugte Kraft über den Klärschlamm selbst übertragen wird. Daraus ergeben sich Anforderungen an den Klärschlamm und insoweit Einschränkungen an die Anwendbarkeit. Die bei dem beschriebenen Verfahren eingesetzte Presse unterliegt diesen Beschränkungen nicht und ist insoweit vielseitiger einsetzbar. Insbesondere muss der Klärschlamm für das beschriebene Verfahren nicht pumpfähig sein, um von einer Pumpe zur Matrize gepumpt werden zu können. Damit kann das beschriebene Verfahren für Klärschlamm mit einem Trockensubstanzgehalt im Bereich von 30 bis 75 Ma.-%, insbesondere im Bereich von 50 bis 70 Ma.-% eingesetzt werden.

Für die Pelletierung mit einer motorisch angetriebenen Presse ist der Wassergehalt des hierin betrachteten Klärschlamms in der Regel ausreichend. Sollte es dennoch zu einer möglichen Verstopfung der Presse kommen, kann der Klärschlamm in Schritt b) befeuchtet werden. Das ist nicht damit zu verwechseln, dass der Trockensubstanzgehalt von teilgetrocknetem Klärschlamm auf das Niveau von mechanisch entwässertem Klärschlamm gebracht wird. Vielmehr ist bevorzugt, dass in Schritt b) ein Pelletierhilfsmittel zu dem Klärschlamm hinzugegeben wird, so dass der Trockensubstanzgehalt des Klärschlamms um maximal 10 Massenprozent-Punkte absinkt, vorzugsweise nur um maximal 5 Massenprozent-Punkte. Das Pelletierhilfsmittel ist vorzugsweise eine Flüssigkeit, beispielsweise Wasser.

Eine Reduktion des Trockensubstanzgehalts um 10 Massenprozent-Punkte liegt beispielsweise vor, wenn der Trockensubstanzgehalt von 40 Ma.-% auf 30 Ma.-% reduziert wird. Durch bei der Pelletierung in Presskanälen auftretende Reibungskräfte und einen damit verbundenen Temperaturanstieg des Pelletiergutes verdampft ein Teil des im Klärschlamm enthaltenen Wassers bzw. auch der ggf. vorlaufend zugegebenen Flüssigkeit, wodurch sich der Trocknungsaufwand leicht bzw. wieder reduziert.

Nach Schritt b) liegt der Klärschlamm in Form von Pellets vor. In Schritt c) werden die in Schritt b) erhaltenen Pellets von der Pelletiereinrichtung zu einer Trocknungseinrichtung transferiert. Der Transfer kann über eine Fördereinrichtung erfolgen. Die Fördereinrichtung ist vorzugsweise ein Förderband. Die Pellets können die Pelletiereinrichtung über einen Auslass der Pelletiereinrichtung verlassen, mit der Fördereinrichtung gefördert werden und über einen Einlass der Trocknungseinrichtung der Trocknungseinrichtung zugeführt werden. Insoweit können die Pellets von der Pelletiereinrichtung zu der Trocknungseinrichtung transferiert werden. Der Auslass der Pelletiereinrichtung ist vorzugsweise oberhalb des Einlasses der Trocknungseinrichtung oder auf gleicher Höhe wie der Einlass der Trocknungseinrichtung angeordnet. In dem Fall bewegen sich die Pellets beim Transfer von der Pelletiereinrichtung zur Trocknungseinrichtung nach unten oder auf gleicher Höhe, nicht jedoch nach oben. Das ist besonders kornschonend. Es ist jedoch auch möglich, die Pellets nach oben zu bewegen. Auch das kann kornschonend erfolgen, beispielsweise mit einem Förderband. Allgemein kann ein kornschonender Transport der Pellets erreicht werden, indem Beanspruchungen der Pellets durch die Fördereinrichtung vermieden werden.

In Schritt d) werden die Pellets in der Trocknungseinrichtung getrocknet, so dass die Pellets nach dem Trocknen einen Trockensubstanzgehalt von mindestens 80 Ma.-% haben, vorzugsweise sogar von mindestens 85 Ma.-%. Dadurch können die Pellets pneumatisch gefördert werden.

Am Ende von Schritt d) können die getrockneten Pellets mechanisch zerkleinert werden, beispielsweise mit einem Brecher. Das kann den Eintrag in und die pneumatische Beförderung der Pellets selbst weiter erleichtern.

Eine mechanische Zerkleinerung ist zwar gerade nicht kornschonend. Allerdings müssen die Pellets nach der Trocknung in Schritt d) nicht mehr kornschonend behandelt werden. Nach der Trocknung können die Pellets beispielsweise pneumatisch zu einem nachgelagerten Prozess gefördert werden, insbesondere zu einer thermischen Verwertung. Die pneumatische Förderung ist nicht kornschonend. Daher ist es unkritisch, wenn die Pellets zwischen Trocknung und pneumatischer Förderung mechanisch zerkleinert werden. Das kann sinnvoll sein, wenn sich die Pellets nach der Trocknung zu größeren Agglomeraten verklumpt haben und/oder Platten oder dergleichen bilden, wodurch der Eintrag in die pneumatische Förderung behindert werden könnte. Durch eine mechanische Zerkleinerung beispielsweise mit einem Brecher können die Pellets auf eine für die pneumatische Förderung gewünschte Größe gebracht werden.

Vorzugsweise werden die Pellets in der Trocknungseinrichtung derart getrocknet, dass die getrockneten Pellets aus vollgetrocknetem Klärschlamm gebildet sind. Darunter wird hierin Klärschlamm mit einem Trockensubstanzgehalt von 85 Ma.-% und mehr verstanden. Damit jedoch dahinstehen kann, ob dies eine allgemeingültige Definition ist, wird der Trockensubstanzgehalt hierin konkret angeben. Zudem genügt es, dass der Trockensubstanzgehalt am Ende von Schritt d) bei 80 Ma.-% liegt.

Auf die nähere Ausgestaltung der Trocknungseinrichtung kommt es für das beschriebene Verfahren nicht an. Insbesondere kann eine herkömmliche Trocknungseinrichtung verwendet werden. Vorzugsweise ist die Trocknungseinrichtung ein Bandtrockner. Bei einem solchen werden die Pellets über einen Einlass in eine Kammer eingebracht, mit einem Band durch die Kammer befördert und über einen Auslass aus der Kammer herausgelassen. Während die Pellets mit dem Band durch die Kammer befördert werden, strömt ein warmes Gas wahlweise von unten nach oben oder umgekehrt durch die Pelletschüttung auf dem Band. Dadurch werden diese getrocknet.

Es genügt, dass der Bandtrockner ein einziges solches Band aufweist. Der Bandtrockner kann aber auch mehrere übereinander angeordnete Bänder aufweisen, welche die Pellets nacheinander fördern. Dadurch kann der Bandförderer besonders platzsparend ausgebildet sein. Beispielsweise können die Pellets über den Einlass in die beheizte Kammer eingebracht werden, mit einem oberen Band in eine erste Richtung durch die Kammer befördert werden, vom oberen Band auf ein unterhalb des ersten Bandes angeordnetes unteres Band fallen, mit dem unteren Band entgegen der ersten Richtung durch die Heizkammer befördert werden und über den Auslass aus der Kammer herausgelassen werden.

Während der Trocknung durchläuft Klärschlamm eine Leimphase. In der Leimphase ist die mechanische Handhabung des Klärschlamms erschwert. Es ist daher bevorzugt, dass der Bandtrockner so ausgestaltet und eingestellt ist, dass die Pellets spätestens bei Erreichen des Endes des oberen Bandes die Leimphase bereits durchlaufen haben. Wenn die Pellets dann von dem oberen Band auf das untere Band fallen, befinden sie sich nicht in der Leimphase, so dass entsprechende Nachteile beim Transfer vom oberen Band auf das untere Band vermieden werden. Allgemein ist bevorzugt, dass der Bandtrockner so ausgestaltet und eingestellt ist, dass die Pellets spätestens bei Erreichen des Endes des oberen Bandes einen Trockensubstanzgehalt von mindestens 50 Ma.-%, insbesondere von mindestens 60 Ma.-% haben. In dem Fall kann davon ausgegangen werden, dass die Pellets die Leimphase bereits durchlaufen haben.

Mit den Schritten b) und d) erfolgen die Pelletierung und die Trocknung in voneinander getrennten Schritten. Mit Hilfe der separaten Verfahrensstufe der Pelletierung gemäß Schritt b) können zielgerichtet und optimal auf den Trocknungsprozess abgestimmte Pellets hergestellt werden. Aufgrund des größtenteils bereits durch beispielsweise solare oder solarthermische Trocknung entfernten Wassers ist der verbleibende Trocknungsaufwand vergleichsweise gering. Dies hat zur Folge, dass auch das Trocknungsverfahren - im Vergleich zum Einsatz von mechanisch entwässertem Klärschlamm - deutlich kleiner ausgeführt werden kann.

In einer bevorzugten Ausführungsform umfasst das Verfahren weiterhin:
e) Transferieren der in Schritt d) getrockneten Pellets von der Trocknungseinrichtung zu einer Verwertungseinrichtung zur thermischen Verwertung der Pellets,
f) thermisches Verwerten der getrockneten Pellets in der Verwertungseinrichtung.

Durch die der Trocknung vorgeschaltete Pelletierung kann der verfügbare, jedoch im Material- und Prozesshandling innerhalb der thermischen Verwertungsanlagen problematische Klärschlamm mit dem angegebenen Trockensubstanzgehalt im Bereich von von 30 bis 75 Ma.-% über den Weg der Volltrocknung (und damit hinsichtlich seiner Eigenschaften auch standardisierte Brennstoff) Klärschlamm-Monoverbrennung aber auch Mitverbrennungsanlagen beispielsweise mittels pneumatischer Förderung zugeführt werden. Zudem vereinfacht sich durch die Pelletierung und Nachtrocknung auch der Ein- und Austrag aus Siloanlagen im Sinne der Zwischenlagerung des Brennstoffes.

Dies wird in der vorliegenden Ausführungsform insoweit ausgenutzt, als dass der Klärschlamm als Teil des Verfahrens thermisch verwertet wird. Dazu ist eine Verwertungseinrichtung vorgesehen. Die Verwertungseinrichtung kann eine Verbrennungseinrichtung sein. Vorzugsweise ist die Verwertungseinrichtung eine Monoverbrennungseinrichtung. Das thermische Verwerten kann eine Verbrennung sein. Auf die nähere Ausgestaltung der Verwertungseinrichtung kommt es für das beschriebene Verfahren nicht an. Insbesondere kann eine herkömmliche Verwertungseinrichtung verwendet werden. Die Verwertungseinrichtung ist vorzugsweise eine Monoverbrennungseinrichtung. Eine solche ist für die Monoverbrennung von Klärschlamm eingerichtet.

In Schritt e) werden die in Schritt d) getrockneten Pellets von der Trocknungseinrichtung zu der Verwertungseinrichtung transferiert. Dieser Transfer kann auf verschiedene Weisen erfolgen. Da der Klärschlamm nach Schritt d) einen Trockensubstanzgehalt von mindestens 80 Ma.-% hat, sind die Anforderungen an den Transfer gemäß Schritt e) geringer als an den Transfer gemäß Schritt c). Insbesondere können für den Transfer gemäß Schritt e) herkömmliche Methoden zum Befördern von vollgetrocknetem Klärschlamm verwendet werden.

Die Pelletiereinrichtung und die Trocknungseinrichtung sind vorzugsweise zusammen Teil einer Vorrichtung. Die Verwertungseinrichtung kann ebenfalls Teil dieser Vorrichtung sein. In dem Fall befindet sich die Verwertungseinrichtung in räumlicher Nähe zur Pelletiereinrichtung und zur Trocknungseinrichtung. In dem Fall kann die Verwertungseinrichtung auch die für die Trocknung benötigte Wärme ganz oder teilweise zur Verfügung stellen. Die in Schritt d) getrockneten Pellets können dann auch über eine Fördereinrichtung von der Trocknungseinrichtung direkt oder indirekt zu der Verwertungseinrichtung transferiert werden. Die Fördereinrichtung kann beispielsweise ein Schneckenförderer, Trogkettenförderer oder eine pneumatische Förderung sein.

Ist für den Transfer gemäß Schritt c) ebenfalls eine Fördereinrichtung vorgesehen, kann diese als erste Fördereinrichtung bezeichnet werden und kann die in Schritt e) verwendete Fördereinrichtung in Abgrenzung davon als zweite Fördereinrichtung bezeichnet werden.

Zwischen der Trocknungseinrichtung und der Verwertungseinrichtung können die getrockneten Pellets ein Zwischenlager wie beispielsweise ein Silo durchlaufen, in welchem die getrockneten Pellets zwischengelagert werden.

Die Verwertungseinrichtung muss jedoch nicht Teil der zuvor erwähnten Vorrichtung sein. Die Verwertungseinrichtung kann sich auch an einem anderen Ort befinden als die Vorrichtung. In dem Fall kann der Transfer gemäß Schritt e) beispielsweise den Transport mit einem Fahrzeug umfassen. Beispielsweise können die getrockneten Pellets als Teil von Schritt e) mit einem LKW transportiert werden.

In Schritt f) werden die getrockneten Pellets thermisch verwertet.. Dies kann auf herkömmliche Weise erfolgen. Mit Schritt f) zeigt sich aber in besonderem Maße der Vorteil des beschriebenen Verfahrens, dass mit diesem die thermische Verwertung von Klärschlamm mit einem Trockensubstanzgehalt im Bereich von 30 bis 75 Ma.-% besonders einfach und effizient möglich ist.

In einer weiteren bevorzugten Ausführungsform des Verfahrens werden die in Schritt b) erhaltenen Pellets in Schritt c) mit einer Fördergeschwindigkeit über eine Fördereinrichtung zu der Trocknungseinrichtung transferiert, wobei die Pellets während des Transfers mit einem Fördermittel der Fördereinrichtung in Kontakt sind, und wobei eine Relativgeschwindigkeit zwischen den mit dem Fördermittel geförderten Pellets und dem Fördermittel höchstens 10 % der Fördergeschwindigkeit beträgt.

Das Fördermittel ist vorzugsweise ein Förderband. Die Pellets können mit dem Förderband transportiert werden, indem die Pellets auf das Förderband aufgelegt werden. Ein Förderband ist ein Beispiel für ein Fördermittel, mit welchem die Pellets ohne Relativbewegung zwischen den Pellets und dem Fördermittel gefördert werden können. Eine Relativgeschwindigkeit zwischen den mit dem Fördermittel geförderten Pellets und dem Fördermittel ist dann null. Das hat den Vorteil, dass die Pellets nicht durch die Relativbewegung zum Fördermittel beschädigt werden. Der Transport ist insoweit kornschonend.

Je geringer die Relativgeschwindigkeit zwischen den mit dem Fördermittel geförderten Pellets und dem Fördermittel, umso kornschonender ist der Transport der Pellets. Das gilt nicht nur für ein Förderband als Fördermittel, sondern auch für andere Arten von Fördermitteln wie Schneckenförderer. Im Idealfall ist die Relativgeschwindigkeit null. Dies ist entsprechend bevorzugt. Allerdings ist es nicht erforderlich, dass die Relativgeschwindigkeit genau null ist. Auch ein Transport mit kleiner Relativgeschwindigkeit kann kornschonend sein. Dies ist hierin insoweit quantifiziert, als dass die Relativgeschwindigkeit in der beschriebenen Ausführungsform auf höchstens 10 % der Fördergeschwindigkeit festgelegt ist. Bevorzugt beträgt die Relativgeschwindigkeit zwischen den mit dem Fördermittel geförderten Pellets und dem Fördermittel höchstens 5 % der Fördergeschwindigkeit. Bevorzugt beträgt die Relativgeschwindigkeit zwischen den mit dem Fördermittel geförderten Pellets und dem Fördermittel höchstens 0,1 m/s, insbesondere höchstens 0,01 m/s.

In einer weiteren bevorzugten Ausführungsform des Verfahrens ist die Trocknungseinrichtung ein Bandtrockner mit einem Band, wobei die Pellets zu Beginn von Schritt d) über ein Verteilelement über eine Breite des Bandes verteilt auf das Band aufgegeben werden.

Bei einem Bandtrockner werden die Pellets über einen Einlass in eine Kammer eingebracht, mit einem Band durch die Kammer befördert und über einen Auslass aus der Kammer herausgelassen. Mit dem Band werden die Pellets in einer Durchlaufrichtung transportiert. Quer zur Durchlaufrichtung bietet das Band Platz, die Pellets über die Breite des Bandes zu verteilen.

In der vorliegenden Ausführungsform kann dies besonders gut ausgenutzt werden, indem die Pellets zu Beginn von Schritt d) über das Verteilelement über eine Breite des Bandes verteilt auf das Band aufgegeben werden. Damit kann insbesondere verhindert werden, dass sich die Pellets beispielsweise in der Mitte des Bandes pyramidenförmig anhäufen. Damit würde nicht nur die Breite des Bandes nicht vollständig ausgenutzt. Vielmehr würden die Pellets auch mit einer ungleichmäßigen Schütthöhe auf das Band aufgebracht. Eine ungleichmäßige Schütthöhe ist nachteilig. Durchströmt das zum Trocknen der Pellets eingesetzte warme Gas Pellets, die mit ungleichmäßiger Schütthöhe auf das Band aufgetragen sind, werden die Pellets ungleichmäßig getrocknet. In Bereichen mit lokal größerer Schütthöhe ist die Trocknung weniger intensiv als in Bereichen mit lokal kleinerer Schütthöhe. Dadurch kann es lokal zu einer Übertrocknung kommen. Dies wiederum kann zu einer lokalen Überhitzung der Pellets führen, was eine Brandgefahr darstellt. In der vorliegenden Ausführungsform kann dies auf einfache Weise verhindert werden.

Das Verteilelement kann beispielsweise eine Schwenkrinne sein. Die Schwenkrinne kann quer zur Durchlaufrichtung des Bandtrockners hin und hergeschwenkt werden.

Das Band des Bandtrockners kann beispielsweise eine Breite im Bereich von 1 bis 4 m, insbesondere im Bereich von 2 bis 2,5 m haben. Das Band des Bandtrockners kann beispielsweise eine Förderlänge im Bereich von 10 bis 50 m, insbesondere im Bereich von 20 bis 40 m haben. Die Förderlänge ist die Länge, über die Material wie die Pellets mit dem Band transportiert werden können.

In einer weiteren bevorzugten Ausführungsform des Verfahrens werden die Schritte b) bis d) gemeinsam in einem geschlossenen System durchgeführt.

Der Klärschlamm kann dem geschlossenen System über den Einlass der Pelletiereinrichtung zugeführt werden. Die getrockneten Pellets können das geschlossene System über einen Auslass der Trocknungseinrichtung verlassen. Zwischen dem Einlass der Pelletiereinrichtung und dem Auslass der Trocknungseinrichtung gelangt der Klärschlamm bzw. gelangen die Pellets nicht mit der Umgebung des geschlossenen Systems in Kontakt. Das kann beispielsweise dadurch realisiert sein, dass die Pellets von einem Auslass der Pelletiereinrichtung über eine geschlossene und mit der Pelletiereinrichtung und der Trocknungseinrichtung verbundene Fördereinrichtung zu einem Einlass der Trocknungseinrichtung gefördert werden.

Unter einem geschlossen System ist also zu verstehen, dass die Pellets von der Umgebung des geschlossenen Systems abgeschirmt sind, solange sie sich in dem geschlossenen System befinden. Es ist zwar möglich, aber nicht erforderlich, dass die Elemente des geschlossenen Systems in einem gemeinsamen Gehäuse angeordnet sind. Alternativ können Elemente des geschlossenen Systems auch voneinander beabstandet angeordnet sein und beispielsweise durch eine Rohrleitung derart miteinander verbunden sein, dass die Pellets auf dem Weg von einem Element zum nächste nicht mit der Umgebung in Kontakt gelangen.

Dass es sich um ein geschlossenes System handelt, ist in Bezug auf den Klärschlamm bzw. die daraus erhaltenen Pellets zu verstehen. In der vorliegenden Ausführungsform werden die Schritte b) bis d) also gemeinsam in einem geschlossenen System für die Pellets durchgeführt.

Die Verwendung eines solchen geschlossenen Systems ist mit Blick auf die Handhabung des Klärschlamms und insbesondere hinsichtlich des Explosionsschutzes vorteilhaft.

Als ein weiterer Aspekt der Erfindung wird eine Vorrichtung zur Behandlung von Klärschlamm beschrieben. Der Klärschlamm hat zu Beginn der Behandlung einen Trockensubstanzgehalt im Bereich von 30 bis 75 Ma.-%. Die Vorrichtung umfasst:
▪ eine Pelletiereinrichtung mit einer motorisch angetriebenen Presse zum Pelletieren des Klärschlamms zu Pellets,
▪ eine der Pelletiereinrichtung nachgelagerte Trocknungseinrichtung zum Trocknen der mit der Pelletiereinrichtung erhaltenen Pellets,
▪ eine Fördereinrichtung zum Fördern der Pellets von der Pelletiereinrichtung zu der Trocknungseinrichtung.

Die beschriebenen Vorteile und Merkmale des Verfahrens sind auf die Vorrichtung anwendbar und übertragbar, und umgekehrt. Die Vorrichtung ist vorzugsweise zur Durchführung des Verfahrens eingerichtet. Das Verfahren wird vorzugsweise mit der Vorrichtung durchgeführt. Die Pelletiereinrichtung dient dann dem Pelletieren gemäß Schritt b), die Fördereinrichtung dem Transfer gemäß Schritt c) und die Trocknungseinrichtung dem Trocknen gemäß Schritt d).

Vorzugsweise weist die Vorrichtung weiterhin eine der Trocknungseinrichtung nachgelagerte Verwertungseinrichtung zum thermischen Verwerten der mit der Trocknungseinrichtung getrockneten Pellets sowie eine zweite Fördereinrichtung zum Fördern der Pellets von der Trocknungseinrichtung zu der Verwertungseinrichtung auf. Die Verwertungseinrichtung kann dann der thermischen Verwertung gemäß Schritt f) dienen und die zweite Fördereinrichtung dem Transfer gemäß schritt e). Die Fördereinrichtung für den Transfer gemäß Schritt c) kann dann als erste Fördereinrichtung bezeichnet werden.

In einer bevorzugten Ausführungsform der Vorrichtung ist die Trocknungseinrichtung ein Bandtrockner mit einem Band, wobei die Fördereinrichtung ein Verteilelement zum Verteilen der Pellets über eine Breite des Bandes aufweist.

In einer weiteren bevorzugten Ausführungsform der Vorrichtung sind die Pelletiereinrichtung, die Trocknungseinrichtung und die Fördereinrichtung gemeinsam als ein geschlossenes System ausgebildet.

In einer weiteren bevorzugten Ausführungsform der Vorrichtung ist die Presse der Pelletiereinrichtung eine Flachmatrizenpresse oder eine Ringmatrizenpresse.

Eine Flachmatrizenpresse und eine Ringmatrizenpresse sind zwei Beispiele für eine motorisch angetriebene Presse. Es hat sich herausgestellt, dass mit diesen beiden Arten von Pressen besonders gute Ergebnisse erzielt werden können.

Die Erfindung wird nachfolgend anhand der Figur näher erläutert. Die Figur zeigt ein besonders bevorzugtes Ausführungsbeispiel, auf das die Erfindung jedoch nicht begrenzt ist. Die Figur und die darin dargestellten Größenverhältnisse sind nur schematisch. Es zeigt:

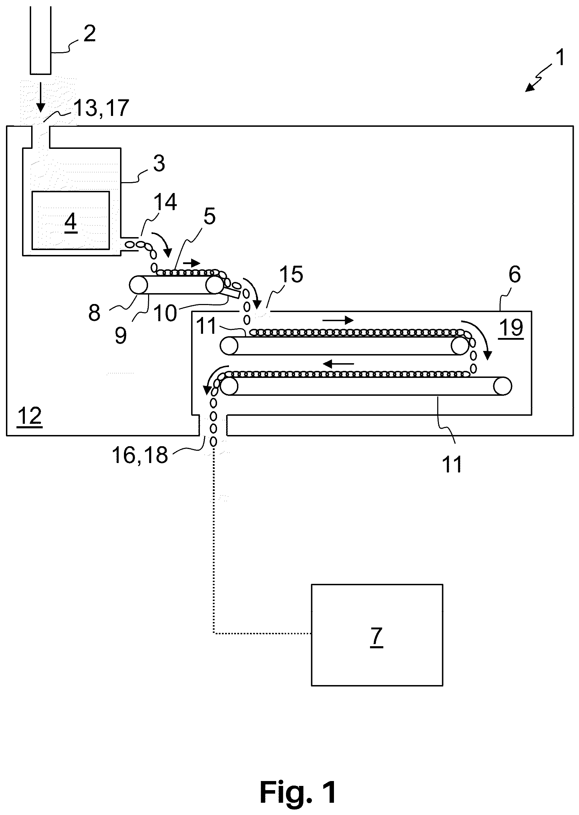

- Fig. 1:: eine erfindungsgemäße Vorrichtung zur Behandlung von Klärschlamm.

Fig. 1 zeigt eine Vorrichtung 1 zur Behandlung von Klärschlamm 2. Insbesondere der zu Beginn der Behandlung vorliegende Klärschlamm 2 ist nur schematisch gezeigt.

Die Vorrichtung 1 umfasst eine Pelletiereinrichtung 3 mit einer motorisch angetriebenen Presse 4 zum Pelletieren des Klärschlamms 2 zu Pellets 5. Die Pellets 5 sind in Fig. 1 zur Veranschaulichung überproportional groß dargestellt. Die Presse 4 der Pelletiereinrichtung 3 kann eine Flachmatrizenpresse oder eine Ringmatrizenpresse sein. Weiterhin umfasst die Vorrichtung 1 eine der Pelletiereinrichtung 3 nachgelagerte Trocknungseinrichtung 6 zum Trocknen der mit der Pelletiereinrichtung 3 erhaltenen Pellets 5. Weiterhin umfasst die Vorrichtung 1 eine Fördereinrichtung 8 zum Fördern der Pellets 5 von der Pelletiereinrichtung 3 zu der Trocknungseinrichtung 6. Die Fördereinrichtung 8 hat ein Förderband als ein Fördermittel 9. Werden die Pellets 5 mit der Fördereinrichtung 8 gefördert, sind die Pellets 5 mit dem Fördermittel 9 der Fördereinrichtung 8 in Kontakt, ohne dass es eine Relativbewegung zwischen den Pellets 5 und dem Fördermittel 9 gibt.

Die Trocknungseinrichtung 6 ist ein Bandtrockner mit zwei Bändern 11, welche innerhalb einer Kammer 19 angeordnet sind. Die Fördereinrichtung 8 weist eine Schüttrinne als ein Verteilelement 10 zum Verteilen der Pellets 5 über eine Breite des Bandes 11 auf. Die Schüttrinne kann so hin und her verdreht werden, dass ein Strom der Pellets 5 in die Zeichenebene hinein und aus der Zeichenebene heraus verschoben wird. Damit können die Pellets 5 mit einer gleichmäßigen Schütthöhe auf dem oberen der beiden Bänder 11 der Trocknungseinrichtung 6 abgelegt werden.

Zu Beginn der Behandlung mit der Vorrichtung 1 hat der Klärschlamm einen Trockensubstanzgehalt im Bereich von 30 bis 75 Ma.-%. Insbesondere kann der Klärschlamm teilgetrockneter Klärschlamm sein. Der Klärschlamm 2 wird durch einen Einlass 13 der Pelletiereinrichtung 3 der Pelletiereinrichtung 3 zugeführt. Der Einlass 13 der Pelletiereinrichtung 3 ist zugleich ein Einlass 17 der Vorrichtung 1. In der Pelletiereinrichtung 3 wird der Klärschlamm 2 mit der Presse 4 zu Pellets 5 pelletiert. Die Pellets 5 verlassen die Pelletiereinrichtung 3 über einen Auslass 14 der Pelletiereinrichtung 3 und werden mit der Fördereinrichtung 8 zu einem Einlass 15 der Trocknungseinrichtung 6 gefördert. Mit der Trocknungseinrichtung 6 werden die Pellets 5 getrocknet. Dazu werden die Pellets 5 zunächst mit dem oberen der beiden Bänder 11 durch die Kammer 19 der Trocknungseinrichtung 6 gefördert. Am Ende des oberen Bandes 11 fallen die Pellets 5 auf das untere der beiden Bänder 11. Anschließend werden die Pellets 5 in entgegengesetzter Richtung mit dem unteren Band 11 durch die Kammer 19 der Trocknungseinrichtung 6 gefördert. Am Ende des unteren Bandes 11 gelangen die getrockneten Pellets 5 durch einen Auslass 16 der Trocknungseinrichtung 6 aus der Trocknungseinrichtung 6 heraus. Dabei haben die Pellets 5 einen Trockensubstanzgehalt von mindestens 80 Ma.-%.

Der Auslass 16 der Trocknungseinrichtung 6 ist zugleich ein Auslass 18 der Vorrichtung 1. Um dies in der Zeichnung übersichtlich darstellen zu können, ist der Auslass 16 der Trocknungseinrichtung 6 an einer unteren Seite der Trocknungseinrichtung 6 gezeigt. Insbesondere insoweit ist Fig. 1 nur schematisch. Der Auslass 16 der Trocknungseinrichtung 6 kann insbesondere auch seitlich an der Trocknungseinrichtung 6 ausgebildet sein.

Die Pelletiereinrichtung 3, die Trocknungseinrichtung 6 und die Fördereinrichtung 3 sind gemeinsam als ein geschlossenes System 12 ausgebildet. Der Klärschlamm 2 kann dem geschlossenen System 12 über den Einlass 17 der Vorrichtung 1 zugeführt werden. Die getrockneten Pellets 5 können das geschlossene System 12 über den Auslass 18 der Vorrichtung 1 verlassen.

Vom Auslass 18 der Vorrichtung 1 gelangen die getrockneten Pellets 5 zu einer Verwertungseinrichtung 7. Die Verwertungseinrichtung 7 ist in dem gezeigten Beispiel zwar Teil der Vorrichtung 1, nicht aber des geschlossenen Systems 12. Die Anordnung der Verwertungseinrichtung 7 relativ zur Vorrichtung 1 ist nur beispielhaft. Der Weg der getrockneten Pellets 5 vom Auslass 18 der Vorrichtung 1 zur Verwertungseinrichtung 7 ist daher nur durch eine gepunktete Linie angedeutet. In der Verwertungseinrichtung 7 werden die Pellets 5 thermisch verwertet.

### Bezugszeichenliste

- 1: Vorrichtung
- 2: Klärschlamm
- 3: Pelletiereinrichtung
- 4: Presse
- 5: Pellet
- 6: Trocknungseinrichtung
- 7: Verwertungseinrichtung
- 8: Fördereinrichtung
- 9: Fördermittel
- 10: Verteilelement
- 11: Band
- 12: geschlossenes System
- 13: Einlass der Pelletiereinrichtung
- 14: Auslass der Pelletiereinrichtung
- 15: Einlass der Trocknungseinrichtung
- 16: Auslass der Trocknungseinrichtung
- 17: Einlass der Vorrichtung
- 18: Auslass der Vorrichtung
- 19: Kammer

## Patentansprüche

1. Verfahren zur Behandlung von Klärschlamm (2), welcher zu Beginn des Verfahrens einen Trockensubstanzgehalt im Bereich von 30 bis 75 Ma.-% hat, umfassend:
a) Zuführen des Klärschlamms (2) in eine Pelletiereinrichtung (3) mit einer motorisch angetriebenen Presse (4),
b) Pelletieren des Klärschlamms (2) mit der Pelletiereinrichtung (3) zu Pellets (5),
c) Transferieren der in Schritt b) erhaltenen Pellets (5) zu einer Trocknungseinrichtung (6),
d) Trocknen der Pellets (5) in der Trocknungseinrichtung (6), so dass die Pellets (5) nach dem Trocknen einen Trockensubstanzgehalt von mindestens 80 Ma.-% haben.

2. Verfahren nach Anspruch 1, weiterhin umfassend:
e) Transferieren der in Schritt d) getrockneten Pellets (5) von der Trocknungseinrichtung (6) zu einer Verwertungseinrichtung (7) zur thermischen Verwertung der Pellets (5),
f) thermisches Verwerten der getrockneten Pellets (5) in der Verwertungseinrichtung (7).

3. Verfahren nach einem der vorstehenden Ansprüche, wobei die in Schritt b) erhaltenen Pellets (5) in Schritt c) mit einer Fördergeschwindigkeit über eine Fördereinrichtung (8) zu der Trocknungseinrichtung (6) transferiert werden, wobei die Pellets (5) während des Transfers mit einem Fördermittel (9) der Fördereinrichtung (8) in Kontakt sind, und wobei eine Relativgeschwindigkeit zwischen den mit dem Fördermittel (9) geförderten Pellets (5) und dem Fördermittel (9) höchstens 10 % der Fördergeschwindigkeit beträgt.

4. Verfahren nach einem der vorstehenden Ansprüche, wobei die Trocknungseinrichtung (6) ein Bandtrockner mit einem Band (11) ist, und wobei die Pellets (5) zu Beginn von Schritt d) über ein Verteilelement (10) über eine Breite des Bandes (11) verteilt auf das Band (11) aufgegeben werden.

5. Verfahren nach einem der vorstehenden Ansprüche, wobei die Schritte b) bis d) gemeinsam in einem geschlossenen System (12) durchgeführt werden.

6. Vorrichtung (1) zur Behandlung von Klärschlamm (2), welcher zu Beginn der Behandlung einen Trockensubstanzgehalt im Bereich von 30 bis 75 Ma.-% hat, umfassend:
▪ eine Pelletiereinrichtung (3) mit einer motorisch angetriebenen Presse (4) zum Pelletieren des Klärschlamms (2) zu Pellets (5),
▪ eine der Pelletiereinrichtung (3) nachgelagerte Trocknungseinrichtung (6) zum Trocknen der mit der Pelletiereinrichtung (3) erhaltenen Pellets (5),
▪ eine Fördereinrichtung (8) zum Fördern der Pellets (5) von der Pelletiereinrichtung (3) zu der Trocknungseinrichtung (6).

7. Vorrichtung (1) nach Anspruch 6, wobei die Trocknungseinrichtung (6) ein Bandtrockner mit einem Band (11) ist, und wobei die Fördereinrichtung (8) ein Verteilelement (10) zum Verteilen der Pellets (5) über eine Breite des Bandes (11) aufweist.

8. Vorrichtung (1) nach Anspruch 6 oder 7, wobei die Pelletiereinrichtung (3), die Trocknungseinrichtung (6) und die Fördereinrichtung (3) gemeinsam als ein geschlossenes System (12) ausgebildet sind.

9. Vorrichtung (1) nach einem der Ansprüche 6 bis 8, wobei die Presse (4) der Pelletiereinrichtung (3) eine Flachmatrizenpresse oder eine Ringmatrizenpresse ist.
